# EUROPÄISCHE PATENTSCHRIFT

(11) **EP 3 326 262 B1**
(45) Veröffentlichungstag und Bekanntmachung des Hinweises auf die Patenterteilung: **11.09.2019**
(21) Anmeldenummer: 16747865.0
(22) Anmeldetag: 14.07.2016
(51) Int. Cl.: H02J 50/60

(54) **DETEKTION EINES FREMDKÖRPERS IN EINEM ELEKTROMAGNETISCHEN FELD, INSBESONDERE MIT HILFE EINES NFC CHIPS**
DETECTION OF A FOREIGN OBJECT IN AN ELECTROMAGNETIC FIELD, IN PARTICULAR BY MEANS OF AN NFC CHIP
DÉTECTION D'UN ÉLÉMENT ÉTRANGER DANS UN CHAMP ÉLECTROMAGNÉTIQUE, NOTAMMENT À L'AIDE D'UNE PUCE NFC

(30) Priorität: 24.07.2015 DE 102015213981
(43) Veröffentlichungstag der Anmeldung: 30.05.2018
(73) Patentinhaber: Conti Temic microelectronic GmbH, 90411 Nürnberg (DE)
(72) Erfinder: BAREISS, Thomas, 88339 Bad Waldsee (DE); WOHLWENDER, Christian, 88356 Ostrach (DE)
(86) Internationale Anmeldenummer: PCT/EP2016/066729
(87) Internationale Veröffentlichungsnummer: WO 2017/016882

(56) Entgegenhaltungen:
- US-A1- 2014 125 287

## Beschreibung

Die Erfindung betrifft Verfahren und Vorrichtungen zur Detektion von Fremdkörpern.

US 2013/0093387 A1 beschreibt ein induktives Laden z.B. eines Telefons in einem Automobil gemäß einem WPC Standard und mit einer Abstimmung mit einer NFC Nahfeld-Kommunikation. DE 10 2004 023 197 B beschreibt ein drahtloses Laden eines Kraftfahrzeugschlüssels in einer Ladeschale einer Drahtlosenergieübertragungseinrichtung.
US 2014/125287 A1 beschreibt eine Vorrichtung zur Detektion eines Fremdkörpers durch eine Ladevorrichtung die dazu ausgebildet ist, einen Verstärkungs-Steuerungs-Wert eines Bauelements mit einem gespeicherten Referenzwert zu vergleichen, und bei Abweichung davon eine Detektion eines Fremdkörpers festzustellen.

Eine Aufgabe der Erfindung ist es, Verfahren und Vorrichtungen zur Detektion eines Fremdkörpers für eine Ladevorrichtung eines Kraftfahrzeugs zu optimieren. Die Aufgabe wird jeweils durch den Gegenstand der unabhängigen Patentansprüche gelöst. Einige besonders vorteilhafte Ausgestaltungen der Erfindung sind in den Unteransprüchen und der Beschreibung angegeben. Ausgestaltungen der Erfindung können eine effiziente Detektion eines Fremdkörpers ermöglichen.

Weitere Merkmale und Vorteile einiger vorteilhafter Ausgestaltungen der Erfindung ergeben sich aus der nachfolgenden Beschreibung von Ausführungsbeispielen der Erfindung anhand der Zeichnung. Dabei zeigt zur Veranschaulichung von einigen möglichen Ausgestaltungen der Erfindung, jeweils vereinfachend schematisch:
- Fig. 1: eine Detektion eines Fremdkörpers durch eine Ladevorrichtung in einem Kraftfahrzeug,
- Fig. 2: Einflüsse von verschiedenen Fremdkörpern wie Aluminiumfolien oder Münzen auf AGC Werte, beim Laden und/oder (NFC) Kommunizieren der Ladevorrichtung mit verschiedenen Mobiltelefonen,
- Fig. 3: eine Ladevorrichtung und verschiedene sie beeinflussende Fremdkörper.

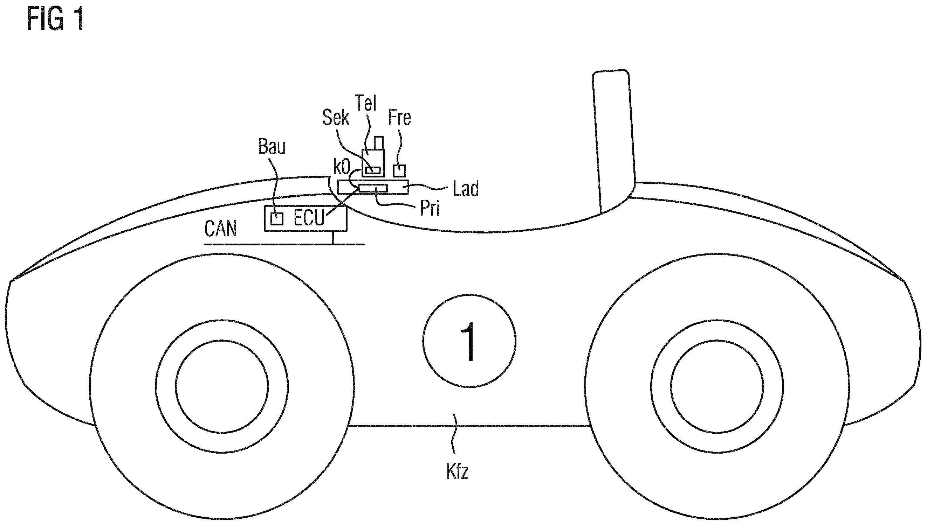

Fig. 1 zeigt zur Erläuterung einer Verstärkungs-Steuerungs-Wert-basierten (AGC) Detektion eines Fremdkörpers Fre gemäß einer Ausgestaltung der Erfindung eine in einem Kraftfahrzeug Kfz angeordnete und/oder montierte Ladevorrichtung mit einer Ladeschale Lad und mit einer Primärspule Pri zum drahtlosen Laden (z.B. gemäß WPC, Qi, etc.) eines zu ladenden Geräts Tel (wie z.B. eines Mobiltelefons oder Smartphones oder Autoschlüssels) über dessen (mit der Primärspule Pri) gekoppelte (k0) Sekundärspule Sek.

Zur Kommunikation zwischen der Ladeeinrichtung seitens des Kraftfahrzeugs Kfz und dem zu ladenden Gerät Tel kann z.B. eine Kommunikation durch Modulation über die Ladespulen Pri, Sek und/oder eine Nahfeld-Kommunikation wie z.B. NFC über die Ladespulen Pri, Sek und/oder weitere Spulen/Antennen vorgesehen sein, womit z.B. das zu ladende Gerät Tel von der Ladeeinrichtung identifiziert werden kann und z.B. Parameter beim Laden eines Energiespeichers (z.B. einer Batterie) im zu ladenden Gerät Tel in Abhängigkeit von diesem festgelegt werden können.

Die (Primärspule Pri und ggf. Steuerung ECU,Bau der) Ladevorrichtung kann z.B. von einer Autobatterie des Kraftfahrzeugs Kfz gespeist sein. Die Ladevorrichtung kann Pri z.B. von einer Steuerung (z.B. in einer ECU und/oder in der Ladeschale) des Kraftfahrzeugs Kfz und/oder über einen (CAN etc.) Bus CAN des Kraftfahrzeugs Kfz gesteuert werden.

In einer Steuerung ECU können Referenzwerte Ref betreffend vor-bekannte und/oder im Kraftfahrzeug Kfz bereits gemessene Verstärkungs-Steuerungs-Werte AGC (wie z.B. AGC- oder Automatic-Gain-Control- Werte) eines die Primärspule Pri und/oder eine (NFC/WLAN) Kommunikationsspule ansteuernden Bauelements Bau beim Laden zumindest des Geräts Tel (und ggf. einiger oder vieler anderer möglicherweise zu ladender Geräte) gespeichert sein.

Diese Referenzwerte können insbesondere Verstärkungs-Steuerungs-Werte oder Automatic-Gain-Control-(AGC) Werte sein, die von einem
Bauelement Bau (insbesondere einem NFC-Nahfeldkommunikations-Chip zur Steuerung einer Nahfeldkommunikation (NFC) und/oder einem NFC3340 Chip) z.B. beim automatischen Steuern / Regeln der von einem Treiber an die Primärantenne Pri und/oder eine weitere (NFC-etc.) Antenne gegebenen Leistung und/oder zur Antennendiagnose verwendet werden. AGC Werte können z.B. von einem Bauelement Bau (wie z.B. einem NFC3340 Chip) laufend bestimmt werden und zur Nachregelung der von einem Treiber an eine Antenne (Pri etc.) gegebenen abzustrahlenden Leistung verwendet werden.

Nach Ausgestaltungen der Erfindung werden Automatic-Gain-Control-(AGC) Werte zur Detektion eines Fremdkörpers Fre verwendet, indem sie mit gespeicherten Referenzwerten Ref für ein oder mehrere ladbare Geräte Tel verglichen werden.

Ein zu ladendes Gerät Tel kann z.B. über die Ladespulen Pri, Sek und/oder über Nahfeldkommunikation NFC (ggf. auch über eine weitere Antenne) und/oder über WLAN und/oder RFID und/oder einer Mobilfunkverbindung identifiziert werden,
und ein zu dem identifizierten Gerät Tel vor-bekannter und/oder gespeicherter Automatic-Gain-Control-(AGC) Wert kann mit dem aktuell gemessenen Automatic-Gain-Control- (AGC) Wert verglichen werden, um festzustellen, ob außer dem (ggf. identifizierten) zu ladenden Gerät Tel noch ein Fremdkörper Fre wie z.B. (aber nicht nur) ein Stück Aluminiumfolie oder eine Münze in der (eine Veränderung von AGC bedingenden) Nähe der Ladestation ist, weil der Fremdkörper Fre das von der Primärspule Pri ausgesandte Feld beeinflussen kann und damit eine automatische Nachregelung der Sendeleistung unter Veränderung des aktuellen Automatic-Gain-Control-(AGC) Werts auslösen kann; der (AGC) kann also auch verwendet werden für eine Detektion eines Fremdkörpers Fre im Bereich der Ladevorrichtung, z.B. bei Überschreiten eines vorgegebenen Schwellwerts (und/oder einer gewissen Zeit des Vorliegens des Überschreitens) der Differenz des aktuellen Automatic-Gain-Control-(AGC) Werts zum für das zu ladende Gerät Tel erwarteten Automatic-Gain-Control-(AGC) Wert.

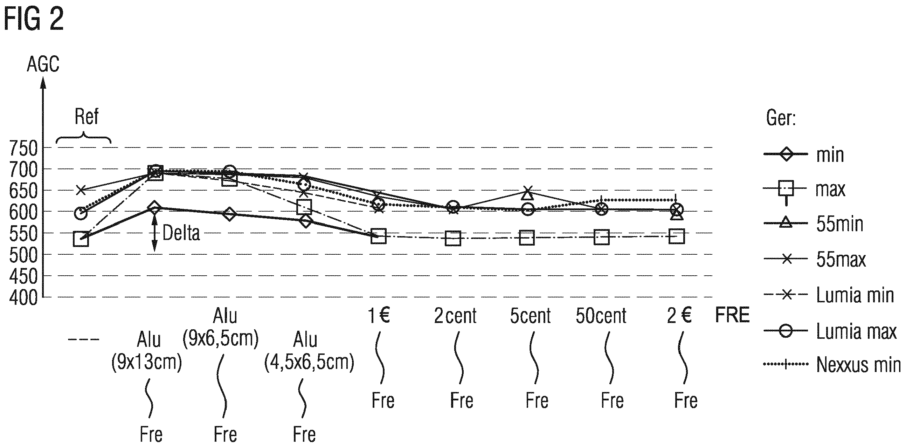

Fig. 2 zeigt beispielhaft links (ohne Fremdkörper) für einige Geräte (Mobiltelefone wie z.B. S5, Lumia, Nexxus) bekannte und/oder bereits bei deren Laden (ohne Fremdkörper) gemessene (minimale = min und maximale = max) Automatic-Gain-Control- (AGC) Werte ACG, die als Referenzwerte Ref gespeichert (in einer ECU etc.) sein können,
und die mit aktuell von einem (NFC3340 Chip etc.) Bauelement Bau bestimmten Automatic-Gain-Control-(AGC) Werten ACG verglichen werden können, um das Vorhandensein eines Fremdkörpers Fre im Bereich der Ladevorrichtung zu detektieren,
also z.B. (von links in zweiter Position nach rechts) eines Fremdkörpers in Form einer Aluminiumfolie von 9*13cm, einer Aluminiumfolie von 9*6,5cm, einer Aluminiumfolie von 4,5*6,5cm, einer lEuro Münze, einer 2cent Münze, einer 5cent Münze, einer 50cent Münze und einer 2Euro Münze.

Im Falle eines Fremdkörpers Fre in Form einer Aluminiumfolie geht der AGC Wert hier in die Sättigung und könnte eine Kommunikation mit dem Mobiltelefon Tel stören.

Wenn sich vor oder während eines drahtlosen Ladens eines Geräts Tel über die Ladespulen Pri, Sek mit einem durch Wechselstrom erzeugten Feld im räumlichen Bereich der Ladestation Fremdkörper Fre in Form von Metallkörpern wie Münze, Ringen, Folien, Büroklammern etc. befinden, kann es zu Wirbelstromverlusten in den Metallkörpern und/oder zu einer zusätzlichen Erwärmung der Ladefläche (an Pri und/oder Sek) durch die fremden Metallkörper und/oder zum Energieentzug (und damit Fehlen eines Teils der Energie zum Laden durch die Ladevorrichtung) kommen.

Wenn also vor oder während eines drahtlosen Ladens eines Geräts Tel im räumlichen Bereich der Ladestation ein Fremdkörper Fre insbesondere in Form von Metallkörpern detektiert wird, kann der Benutzer der Ladevorrichtung aufgefordert werden diesen Fremdkörper zu entfernen und/oder es kann (z.B. nach einer gewissen Zeitspanne oder generell) das Laden unterbrochen werden.

Ausgestaltungen der Erfindung können relativ einfach und ggf. ohne zusätzlichen Hardwareaufwand realisierbar sein.

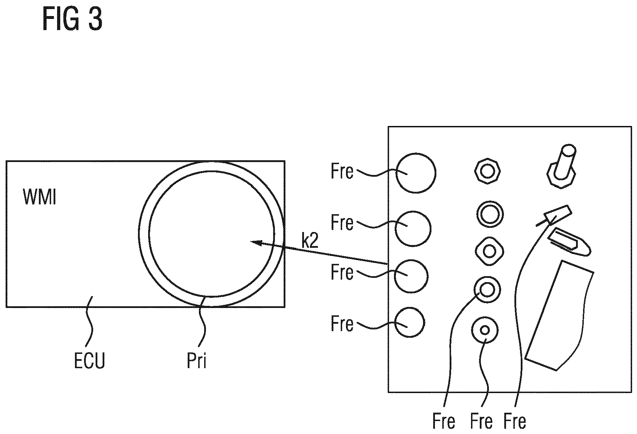

Fig. 3 zeigt links vereinfachend eine (WMI) Ladevorrichtung mit einer Antenne Pri und einer Steuerung (ECU),
und rechts zu detektierende Fremdkörper Fre, wie Münzen, Scheiben, Büroklammern, die mit Ausgestaltungen der Erfindung detektierbar sind, weil sie mit der Antenne Pri der Ladevorrichtung koppeln (k2) und den AGC Wert beeinflussen.

## Patentansprüche

1. Vorrichtung zur Detektion eines Fremdkörpers (Fre) durch eine drahtlose Ladevorrichtung (Pri, Bau) eines Kraftfahrzeugs (Kfz) **dadurch gekennzeichnet, dass**
sie dazu ausgebildet ist,
- dass ein zu ladendes Gerät (Tel), insofern nicht bekannt, identifiziert wird,
- dass ein dem zu ladenden Gerät (Tel) zugeordneter, gespeicherter Automatic-Gain-Control-Verstärkungs-Steuerungswert (AGC) ermittelt wird, wobei der Verstärkungs-Steuerungswert (AGC) ein Mass für eine von einer Primärantenne (Pri) der Ladevorrichtung abgestrahlten Leistung ist,
- dass eine Nachregelung des Verstärkungs-Steuerungs-Werts (AGC) so erfolgt, dass die abgestrahlte Leistung konstant bleibt,
- dass der ermittelte Verstärkungs-Steuerungs-Wert (AGC) mit dem aktuellen, während des Ladens des zu ladenden Geräts nachgeregelten Verstärkungs-Steuerungs-Wert (AGC) verglichen wird,
- und dass bei Abweichung des nachgeregelten Verstärkungs-Steuerungs-Werts (AGC) von dem gespeicherten Verstärkungs-Steuerungs-Wert (AGC) eine Detektion eines Fremdkörpers festgestellt wird.

2. Vorrichtung nach Anspruch 1,
**dadurch gekennzeichnet, dass**
das zu ladende Gerät (Tel) ein Mobiltelefon oder Schlüssel für das Kraftfahrzeug (Kfz) ist.

3. Vorrichtung nach einem der vorhergehenden Ansprüche, **dadurch gekennzeichnet, dass**
der Verstärkungs-Steuerung-Wert (AGC), ein AGC Wert eines Bauelements (Bau), insbesondere eines NFC-Nahfeldkommunikations-Chips zur Steuerung einer Nahfeldkommunikation (NFC), insbesondere eines NFC3340 Chips, ist, und/oder dass er auch zur Antennendiagnose und/oder Antennenansteuerung verwendbar ist.

4. Vorrichtung nach einem der vorhergehenden Ansprüche,
**dadurch gekennzeichnet, dass**
sie dazu ausgebildet ist,
einen Verstärkungs-Steuerungs-Wert (AGC) eines Bauelements (Bau) mit einem gespeicherten Referenzwert (Ref) ohne Anwesenheit eines Fremdkörpers (Fre) und/oder während des Ladens eines zu ladenden Geräts (Tel) in der Ladevorrichtung zu vergleichen.

5. Vorrichtung nach einem der vorhergehenden Ansprüche,
**dadurch gekennzeichnet, dass**
die Vorrichtung dazu ausgebildet ist, bei einer über einem Schwellwert liegenden Abweichung (Delta) des aktuellen Verstärkungs-Steuerungs-Werts (AGC) des Bauelements (Bau) von einem in der Vorrichtung gespeicherten Referenzwert (Ref) insbesondere für das zu ladende Gerät (Tel)
eine Detektion eines Fremdkörpers (Fre) insbesondere im Bereich der Vorrichtung festzustellen.

6. Vorrichtung nach einem der vorhergehenden Ansprüche,
**dadurch gekennzeichnet, dass**
die Vorrichtung dazu ausgebildet ist, in Abhängigkeit von der Abweichung (Delta) des aktuellen Verstärkungs-Steuerungs-Werts (AGC) des Bauelements (Bau) von einem in der Vorrichtung gespeicherten Referenzwert (Ref) insbesondere für das zu ladende Gerät (Tel) eine Eigenschaft, insbesondere Größe oder eine Feldbeeinflussung, des detektierten Fremdkörpers (Fre) festzustellen.

7. Vorrichtung nach einem der vorhergehenden Ansprüche,
**dadurch gekennzeichnet, dass**
die Vorrichtung dazu ausgebildet ist, in Abhängigkeit von der Abweichung (Delta) des aktuellen Verstärkungs-Steuerungs-Werts (AGC) des Bauelements (Bau) von einem in der Vorrichtung gespeicherten Referenzwert (Ref) insbesondere für das zu ladende Gerät (Tel) zu entscheiden, ob eine Ausgabe eines Warnhinweises erforderlich ist.

8. Vorrichtung nach einem der vorhergehenden Ansprüche,
**dadurch gekennzeichnet, dass**
die Vorrichtung dazu ausgebildet ist, ein zu ladendes Gerät (Tel) insbesondere im Bereich der Vorrichtung zu detektieren und/oder identifizieren, insbesondere durch eine Nahfeldkommunikation (NFC) und/oder eine FOD Erkennung und/oder WLAN und/oder Mobilfunk und/oder über die Ladespulen (Pri, Sek).

9. Vorrichtung nach einem der vorhergehenden Ansprüche,
**dadurch gekennzeichnet, dass**
die Vorrichtung eine Antenne und/oder einen BUS-Anschluss (CAN) und/oder eine elektronische Steuerung (ECU) für ein Kraftfahrzeug aufweist.

10. Vorrichtung nach einem der vorhergehenden Ansprüche,
**dadurch gekennzeichnet, dass**
sie zum drahtlosen Laden eines Energiespeichers, insbesondere mindestens einer Batterie, nach mindestens einem Standard zum drahtlosen Laden eines Energiespeichers im zu ladenden Gerät (Tel) ausgebildet ist, insbesondere nach einem Qi-Standard und/oder Powermat-Standard.

11. Vorrichtung nach einem der vorhergehenden Ansprüche,
**dadurch gekennzeichnet, dass**
der Verstärkungs-Steuerungs-Wert (AGC) des Bauelements (Bau) zur Anpassung mindestens eines Ausgangstreibers einer Antennenschaltung eines Kommunikations-Moduls (NFC) und/oder der Primärspule (Pri) vorgesehen ist.

12. Verfahren zur Detektion eines Fremdkörpers (Fre) mit einer Vorrichtung nach einem der vorhergehenden Ansprüche,
**dadurch gekennzeichnet, dass**
sie einen Fremdkörper (Fre) im Bereich der Vorrichtung detektiert durch Vergleichen eines aktuellen Verstärkungs-Steuerungs-Werts (AGC) eines Bauelements (Bau) der Vorrichtung mit einem für das zu ladende Gerät (Tel) gespeicherten Referenzwert (Ref).

## Claims

1. Apparatus for the detection of a foreign body (Fre) by a wireless charging apparatus (Pri, Bau) of a motor vehicle (Kfz),
**characterized in that**
it is configured so that
- a device to be charged (Tel), if not known, is identified,
- a stored automatic-gain-control gain control value (AGC) associated with the device to be charged (Tel) is ascertained, wherein the gain control value (AGC) is a measure of a power emitted by a primary antenna (Pri) of the charging apparatus,
- the gain control value (AGC) is readjusted such that the emitted power remains constant,
- the ascertained gain control value (AGC) is compared with the present gain control value (AGC) readjusted during charging of the device to be charged,
- and detection of a foreign body is ascertained if the readjusted gain control value (AGC) differs from the stored gain control value (AGC).

2. Apparatus according to Claim 1,
**characterized in that**
the device to be charged (Tel) is a mobile phone or a key for the motor vehicle (Kfz).

3. Apparatus according to either of the preceding claims,
**characterized in that**
the gain control value (AGC) is an AGC value of a component (Bau), particularly of an NFC near field communication chip for controlling near field communication (NFC), particularly of an NFC3340 chip, and/or **in that** it can also be used for antenna diagnosis and/or antenna actuation.

4. Apparatus according to one of the preceding claims,
**characterized in that**
it is configured
to compare a gain control value (AGC) of a component (Bau) with a stored reference value (Ref) without the presence of a foreign body (Fre) and/or during the charging of a device to be charged (Tel) in the charging apparatus.

5. Apparatus according to one of the preceding claims,
**characterized in that**
the apparatus is configured so that, if a discrepancy (Delta) between the present gain control value (AGC) of the component (Bau) and a reference value (Ref) stored in the apparatus, particularly for the device to be charged (Tel), is above a threshold value,
it establishes that a foreign body (Fre) has been detected, particularly in the area of the apparatus.

6. Apparatus according to one of the preceding claims,
**characterized in that**
the apparatus is configured to take the discrepancy (Delta) between the present gain control value (AGC) of the component (Bau) and a reference value (Ref) stored in the apparatus, particularly for the device to be charged (Tel), as a basis for establishing a property, particularly a size or a field influence, of the detected foreign body (Fre).

7. Apparatus according to one of the preceding claims,
**characterized in that**
the apparatus is configured to take the discrepancy (Delta) between the present gain control value (AGC) of the component (Bau) and a reference value (Ref) stored in the apparatus, particularly for the device to be charged (Tel), as a basis for deciding whether output of a warning is required.

8. Apparatus according to one of the preceding claims,
**characterized in that**
the apparatus is configured to detect and/or identify a device to be charged (Tel), particularly in the area of the apparatus, particularly by means of near field communication (NFC) and/or FOD detection and/or WLAN and/or mobile radio and/or by means of the charging coils (Pri, Sek).

9. Apparatus according to one of the preceding claims,
**characterized in that**
the apparatus has an antenna and/or a BUS connection (CAN) and/or an electronic controller (ECU) for a motor vehicle.

10. Apparatus according to one of the preceding claims,
**characterized in that**
it is configured for wirelessly charging an energy store, particularly at least one battery, according to at least one standard for wirelessly charging an energy store in the device to be charged (Tel), particularly according to a Qi standard and/or Powermat standard.

11. Apparatus according to one of the preceding claims,
**characterized in that**
the gain control value (AGC) of the component (Bau) is provided for matching at least one output driver of an antenna circuit of a communication module (NFC) and/or of the primary coil (Pri) .

12. Method for detecting a foreign body (Fre) using an apparatus according to one of the preceding claims,
**characterized in that**
said apparatus detects a foreign body (Fre) in the area of the apparatus by comparing a present gain control value (AGC) of a component (Bau) of the apparatus with a reference value (Ref) stored for the device to be charged (Tel).

## Revendications

1. Dispositif de détection d'un élément étranger (Fre) au moyen d'un dispositif de charge sans fil (Pri, Bau) d'un véhicule à moteur (Kfz), **caractérisé en ce qu'**il est conçu de manière à
- identifier un appareil à charger (Tel) s'il n'est pas connu,
- déterminer une valeur de commande automatique de gain (AGC) stockée et associée à l'appareil à charger (Tel), dans lequel la valeur de commande de gain (AGC) est une mesure d'une puissance rayonnée par une antenne primaire (Pri) du dispositif de charge,
- effectuer un réajustement de la valeur de commande de gain (AGC) de manière à ce que la puissance rayonnée reste constante,
- comparer la valeur de commande de gain (AGC) déterminée à la valeur de commande de gain (AGC) actuelle réajustée pendant la charge de l'appareil à charger,
- et déterminer une détection d'un élément étranger lorsque la valeur de commande de gain (AGC) réajustée s'écarte de la valeur de commande de gain (AGC) stockée.

2. Dispositif selon la revendication 1,
**caractérisé en ce que** l'appareil à charger (Tel) est un téléphone mobile ou une clé du véhicule à moteur (Kfz).

3. Dispositif selon l'une des revendications précédentes,
**caractérisé en ce que** la valeur de commande de gain (AGC) est une valeur AGC d'un composant (Bau), notamment d'une puce de communication en champ proche NFC permettant de commander une communication en champ proche (NFC), notamment d'une puce NFC 3340 et/ou **en ce que** celle-ci peut également être utilisée à des fins de diagnostic et/ou de commande d'antenne.

4. Dispositif selon l'une des revendications précédentes,
**caractérisé en ce qu'**il est conçu pour comparer une valeur de commande de gain (AGC) d'un composant (Bau) à une valeur de référence (Ref) stockée sans présence d'un élément étranger (Fre) et/ou pendant la charge d'un appareil à charger (Tel) dans le dispositif de charge.

5. Dispositif selon l'une des revendications précédentes,
**caractérisé en ce que** le dispositif est conçu pour déterminer la détection d'un élément étranger (Fre), notamment dans la zone où se trouve le dispositif, lorsque l'écart (Delta) de la valeur de commande de gain (AGC) actuelle du composant (Bau) par rapport à une valeur de référence (Ref) stockée dans le dispositif, notamment pour l'appareil à charger (Tel), dépasse une valeur de seuil.

6. Dispositif selon l'une des revendications précédentes,
**caractérisé en ce que** le dispositif est conçu pour déterminer, en fonction de l'écart (Delta) de la valeur de commande de gain (AGC) actuelle du composant (Bau) par rapport à une valeur de référence (Ref) stockée dans le dispositif, notamment pour l'appareil à charger (Tel), une caractéristique, notamment une amplitude ou une influence du champ, de l'élément étranger (Fre) détecté.

7. Dispositif selon l'une des revendications précédentes,
**caractérisé en ce que** le dispositif est conçu pour décider, en fonction de l'écart (Delta) de la valeur de commande de gain (AGC) actuelle du composant (Bau) par rapport à une valeur de référence (Ref) stockée dans le dispositif, notamment pour l'appareil à charger (Tel), si l'émission d'un signal d'avertissement est requise.

8. Dispositif selon l'une des revendications précédentes,
**caractérisé en ce que** le dispositif est conçu pour détecter et/ou identifier un appareil à charger (Tel), notamment dans la zone dans laquelle se trouve le dispositif, notamment par communication en champ proche (NFC) et/ou reconnaissance FOD et/ou WLAN et/ou radio mobile et/ou par l'intermédiaire des bobines de charge (Pri, Sek).

9. Dispositif selon l'une des revendications précédentes,
**caractérisé en ce que** le dispositif comprend une antenne et/ou une connexion à un BUS (CAN) et/ou une unité de commande électronique (ECU) pour un véhicule à moteur.

10. Dispositif selon l'une des revendications précédentes,
**caractérisé en ce qu'**il est conçu pour la charge sans fil d'un accumulateur d'énergie, notamment d'au moins une batterie, conformément à au moins une norme de charge sans fil d'un accumulateur d'énergie dans l'appareil à charger (Tel), notamment conformément à une norme Qi et/ou à une norme Powermat.

11. Dispositif selon l'une des revendications précédentes,
**caractérisé en ce que** la valeur de commande de gain (AGC) du composant (Bau) est prévue pour l'adaptation d'au moins un circuit de commande de sortie d'un circuit d'antenne d'un module de communication (NFC) et/ou de la bobine primaire (Pri) .

12. Procédé de détection d'un élément étranger (Fre) au moyen d'un dispositif selon l'une des revendications précédentes,
**caractérisé en ce qu'**il détecte un élément étranger (Fre) dans la zone dans laquelle se trouve le dispositif en comparant une valeur de commande de gain (AGC) actuelle d'un composant (Bau) du dispositif à une valeur de référence (Ref) stockée pour l'appareil à charger (Tel).
